# NOUVEAU FASCICULE DE BREVET EUROPEEN

(11) **EP 0 507 653 B2**
(45) Date de publication et mention de la décision concernant l'opposition: **28.10.1998**
(45) Mention de la délivrance du brevet: 10.05.1995
(21) Numéro de dépôt: 92400824.6
(22) Date de dépôt: 26.03.1992
(51) Int. Cl.: D04H 1/70, B65G 15/14

(54) **Crêpeuse**
Stauchanlage
Compression apparatus

(30) Priorité: 04.04.1991 CH 1000/91
(43) Date de publication de la demande: 07.10.1992
(73) Titulaire: ISOVER SAINT-GOBAIN, 92400 Courbevoie (FR)
(72) Inventeur: Belliot, Claude, F-93500 Pantin (FR)
(74) Mandataire: Le Vaguerèse, Sylvain Jacques

(56) Documents cités:
- EP-A- 0 133 083
- BE-A- 469 335
- DE-A- 1 704 839
- DE-B- 1 281 765
- DK-B- 137 635
- NL-A- 88 527
- US-A- 2 409 066
- Broschure "Aerobelt-transportband"
- Brochure "Pitched Roofing" de Coolag

## Description

La présente invention concerne une crêpeuse selon le préambule de la revendication 1. Une telle crêpeuse est connue du document EP-A-0 133 083.

La crêpeuse est une installation dont le but est de produire une réorganisation des fibres dans un matelas de laine minérale encollées avec un liant non polymérisé. La crepeuse est installée entre la hotte de réception et de formation du matelas et l'étuve de polymérisation du liant. Elle est constituée principalement d'au moins une paire de transporteurs continus à bandes superposées ; elle est destinée à modifier l'orientation et l'agencement des fibres du matelas de laine minérale qui la traverse, en agissant généralement par compression, non seulement dans l'épaisseur mais également sur la longueur du produit. La compression longitudinale se fait par réduction de la vitesse de défilement entre les transporteurs successifs de la réception, de la crêpeuse et de l'étuve. La crêpeuse peut être formée d'une ou plusieurs paires de transporteurs, par exemple dans le cas de trois paires, la première paire peut être synchrone avec la vitesse de réception du matelas de laine minérale, la troisième paire synchrone avec l'avancement du matelas dans l'étuve, tandis que la deuxième paire peut être réglée spécifiquement à une vitesse intermédiaire, en fonction du produit fabriqué.

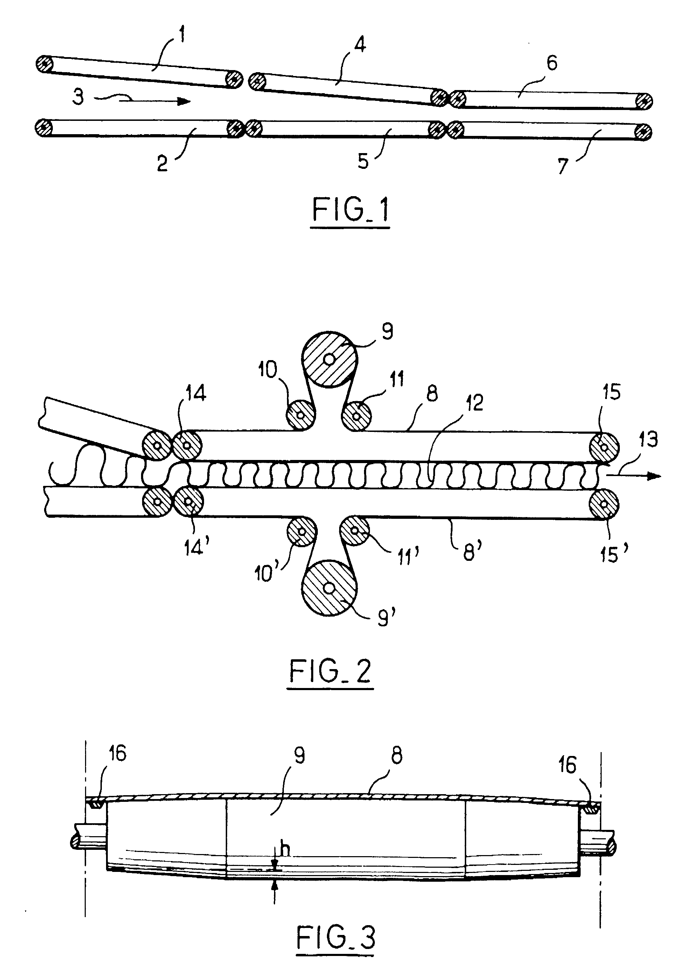

Le schéma de la figure 1 montre le principe d'une crêpeuse de type connu.

On voit, en 1 et 2, une première paire de transporteurs continus. La distance entre eux va en diminuant lorsqu'un matelas (non représenté) de laine minérale passe entre eux dans le sens de la flèche 3. En 4 et 5, on voit une seconde paire de transporteurs continus convergents dans le prolongement de 1 et 2. Ces deux paires de transporteurs assurent la compression du matelas de laine minérale dans le sens de son épaisseur. La vitesse d'entrainement de la seconde paire de convoyeurs 4, 5, est plus faible que celle de la première paire 1, 2, ce qui a pour conséquence une compression longitudinale du matelas.

Une troisième paire de transporteurs 6, 7 fait suite à la seconde (4, 5) et a une vitesse inférieure à celle de cette seconde paire. La distance entre les transporteurs 6, 7 est constante. Cette troisième paire produit donc sur le matelas une augmentation de la pression longitudinale seulement.

Partant de ce principe, on a commencé par utiliser des tapis transporteurs dans une crêpeuse produisant un matelas de 1,2 m de largeur. Les tapis étaient du type connu sous le nom de "TIS-SMETAL". Il s'agit de tapis entièrement métalliques conçus avec deux chaînes d'entraînement à rouleaux, une à chaque bord. Ces deux chaînes sont reliées transversalement, par l'intermédiaire d'attaches spéciales, avec des barres métalliques. Le tapis lui-même est constitué de métal tressé autour des barres transversales. L'entrainement de ces tapis est réalisé par des pignons agissant sur les deux chaînes situées une à chaque bord. Pour recevoir et supporter les efforts de compression dus à l'écrasement progressif du matelas de laine minérale entre les tapis, le métal tressé frotte sur des tables de glissement en acier.

Les défauts majeurs de ces transporteurs métalliques sont :
a) limitation de la vitesse de défilement en continu à environ 40 m/mn, avec des pointes pouvant aller jusqu'à 50 m/mn selon le fournisseur. L'expérience a montré que le fonctionnement de ces transporteurs à de telles vitesses provoque énormément de vibrations et engendre la cassure fréquente des fixations des barres transversales ;
b) encrassement considérable du métal tressé par les fibres encollées, donc fastidieux nettoyages de la machine avec de l'eau sous pression après chaque utilisation ;
c) travail d'entretien considérable de l'entraînement mécanique à chaînes de ces transporteurs, dû à l'oxydation, à l'encrassement et aux vibrations.

Pour éviter l'ensemble de ces inconvénients et surtout pour travailler et produire à des vitesses supérieures, les tapis métalliques ont été remplacés par des bandes transporteuses en matières synthétiques, par exemple des bandes de la marque "SIEGLING", la largeur du matelas de laine minérale étant toujours de 1,2 m.

Le diamètre moyen des rouleaux des transporteurs de la crêpeuse doit être aussi petit que possible et en tous cas limité à 125 mm pour éviter de nuire à la fabrication du produit crêpé. En effet, le passage du matelas d'un transporteur à l'autre doit se faire sur une distance très limitée pour ne pas casser l'effet du crêpage dans le produit. Il est clair qu'une augmentation du diamètre des rouleaux voisins implique un espace vide plus élevé lors du passage du produit d'un transporteur à l'autre.

Cette contrainte du diamètre des rouleaux limite la surface nécessaire à l'entraînement des bandes transporteuses. Au vu des contraintes existantes dans les bandes (pression du produit crêpé en laine minérale évaluée à 500 daN/m²), le diamètre du rouleau d'entraînement en acier lisse serait au minimum de 160 mm. Cette valeur n'étant pas compatible avec ce qui vient d'être exposé, on a été conduit à une disposition selon le schéma figure 2, où on a représenté seulement la fin de la seconde paire de transporteurs et la troisième paire, pour illustrer les moyens d'entraînement de la bande transporteuse, qui sont les mêmes pour les trois paires de transporteurs.

L'entraînement de la bande 8 est réalisé par un tambour d'entraînement 9, en acier, de 153 mm de diamètre et revêtu du caoutchouc d'une dureté Shore d'environ 80° à 90°, pour avoir un coefficient de frottement plus élevé entre le tambour 9 et la bande 8.

Pour assurer un entraînement correct de la bande 8, il est nécessaire dans ce cas, de prévoir deux rouleaux d'embarrage 10, 11. En 12 on a représenté schématiquement le matelas de laine minérale crêpé et prêt à passer dans l'étuve de polymérisation non représentée. La flèche 13 indique le sens d'avancement du matelas entre les transporteurs 14 et 15 sont deux rouleaux de renvoi de la bande 8 de diamètre égal au maximum de 125 mm pour la raison indiquée plus haut.

Une bande 8', disposée symétriquement à 8, complète la troisième paire de transporteurs. Elle est entraînée par un rouleau d'entraînement 9', identique à 9, et passé sur deux rouleaux d'embarrage 10', 11', pareils à 10 et 11 et autour de deux rouleaux de renvoi 14', 15', pareils à 14 et 15.

Pour améliorer le guidage de la bande 8, respectivement 8',le tambour d'entraînement 9, respectivement 9', est usiné cylindroconique (figure 3) et les bandes 8, 8' sont équipées de profils trapézoïdaux 16.

Le guidage de la bande 8, 8' est garanti pour autant que la flexion du tambour d'entraînement 9 soit inférieure à la hauteur h correspondant à la conicité de ce tambour.

Pour supporter les efforts de compression dus à l'écrasement progressif du produit entre les bandes 8 et 8', les bandes transporteuses frottent sur des bandes de glissement réalisées en acier et non représentées sur la figure 2.

Le défaut majeur de cette réalisation est l'encrassement considérable des deux rouleaux d'embarrage 10, 11 , 10', 11' dont la surface est en contact avec la face de la bande 8, 8' venant au contact des fibres encollées formant le matelas 12. En effet, ces deux rouleaux d'embarrage se couvrent de ce fait de fibres encollées et deviennent difformes, ce qui provoque des tensions accrues dans les bandes 8, 8', d'où désalignement de celles-ci. Le guidage des bandes n'est donc plus garanti et finalement les bandes se déchirent.

On comprend, de ce qui précède, pourquoi la largeur du matelas de laine minérale a dû jusqu'à maintenant être limitée à un maximum de 1,2 m.

La présente invention vise à éviter tous les inconvénients mentionnés des constructions antérieures qui viennent d'être rappelées et, de plus, à permettre de réaliser une crêpeuse qui ne soit pas limitée à une largeur de matelas de 1,20 m et permette d'aller sans inconvénient au double de cette dimension.

Elle a pour objet une crêpeuse conforme à la revendication 1.

Les figures 1 et 3 illustrent schématiquement l'état de la technique qui vient d'être rappelé.

Les figures 4 à 7 représentent schématiquement et parallèlement une forme d'exécution de la crêpeuse selon l'invention.

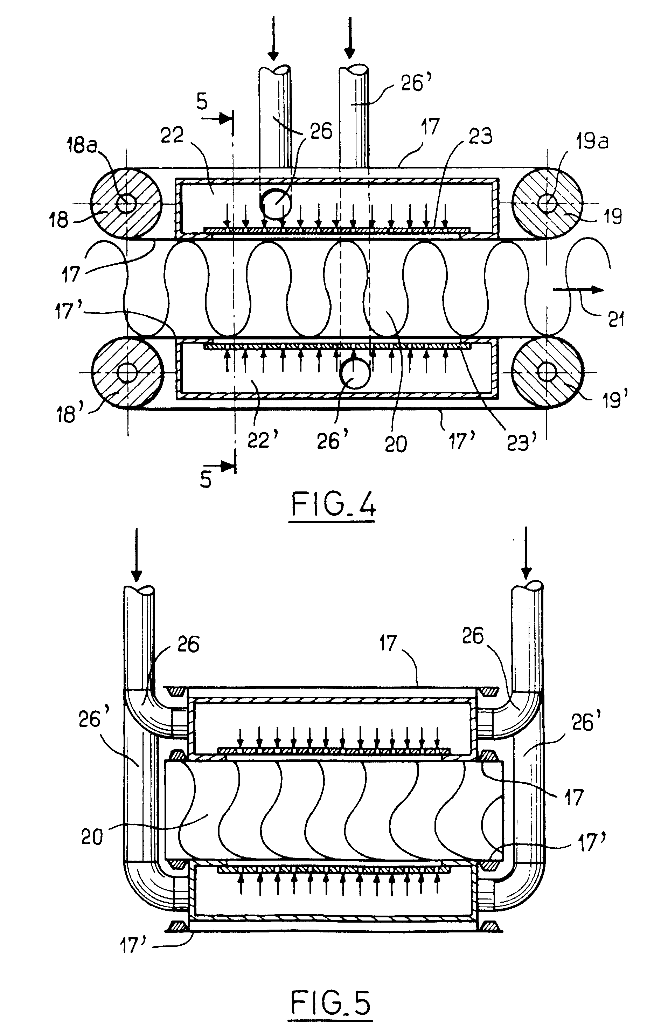

La figure 4 est une vue en coupe longitudinale d'une paire de transporteurs de cette forme d'exécution.

La figure 5 est une vue en coupe transversale de la paire de transporteurs selon la figure 4.

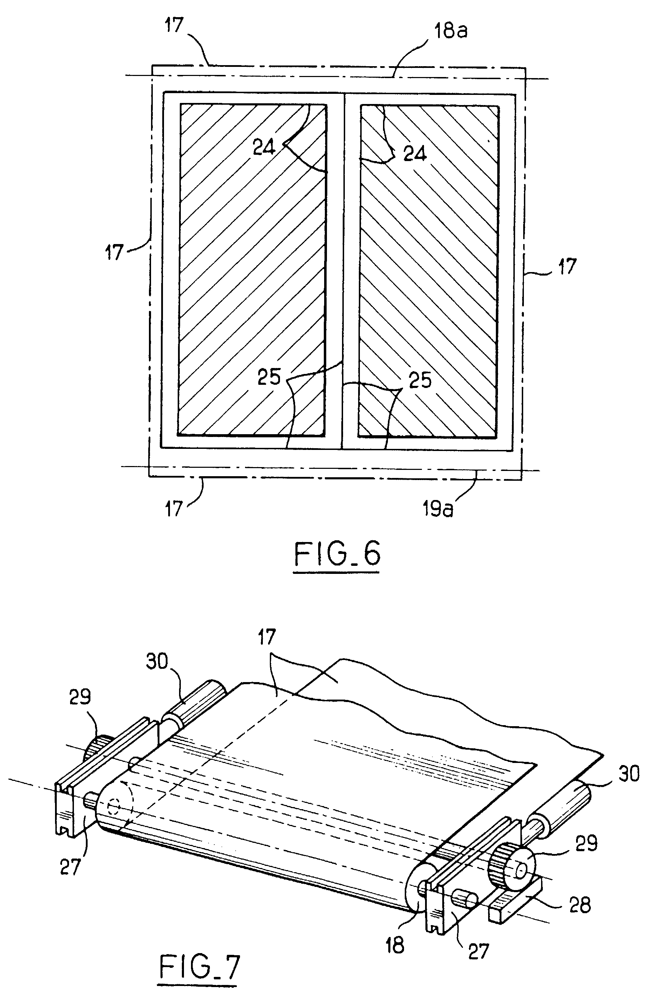

La figure 6 est une vue schématique partielle, en plan, correspondant aux figures 4 et 5.

La figure 7 est une vue en perspective illustrant un dispositif de régulation de tension des transporteurs de la crêpeuse selon les figures 4 à 6.

La disposition générale des transporteurs est analogue à celle montrée sur la figure 1, avec les différences importantes que l'on va décrire maintenant.

Sur les figures 4 et 5, on a représenté en coupe la troisième paire de transporteurs, qui se trouve juste avant l'entrée de l'étuve de polymérisation, étant bien entendu que les deux autres paires sont construites de façon tout à fait analogue.

On voit en 17 la bande transporteuse supérieure et en 17' la bande transporteuse inférieure de cette troisième paire de transporteurs. Ces bandes 17 et 17' sont lisses et en matière synthétique. La bande 17 passé sur des rouleaux 18, 19 entraînant la bande. De même, la bande symétrique 17' passé sur des rouleaux d'entraînement 18', 19'. On voit en 20 le matelas de fibres encollées et en 21 une flèche indiquant le sens du déplacement du matelas 20 à travers la paire de transporteurs représentée.

Dans l'espace compris entre le brin supérieur et le brin inférieur de la bande 17, il est disposé un caisson métallique étanche 22 et de même un autre caisson étanche 22' est disposé entre le brin supérieur et le brin inférieur de la bande transporteuse 17'.

La grande face inférieure du caisson supérieur 22 est formée par une tôle métallique 23 présentant des perforations sur toute sa surface, à l'exception de ses régions marginales situées en regard des parties marginales de la bande 17.

Le caisson inférieur comporte une plaque supérieure perforée 23', symétrique à 23.

On voit en 26 des conduites d'amenée d'air sous pression dans le caisson 22. Cet air sort du caisson par les orifices de la plaque 23 et forme alors un coussin d'air entre cette plaque et le brin inférieur de la bande 17. Des conduites 26' amènent pareillement de l'air sous pression aux caissons 22'.

La disposition est symétrique en ce qui concerne la bande inférieure 17' et les caissons 22'. L'air sortant des caissons 22' forme un coussin d'air entre la bande perforée 23' et le brin supérieur de la bande transporteuse 17'.

Les plaques métalliques 23, 23' assurent le maintien en forme correcte de la partie active des transporteurs 17, 17' passant en regard d'elles, ce qui garantit la compression correcte du matelas de laine minérale 20. Elles sont évidemment rigides pour résister aux déformations de flexion pendant la compression du matelas, par dessus et par dessous (figure 4).

La figure 6 montre la disposition vue en plan. Le caisson 22 est formé, pour des raisons pratiques, de deux caissons rectangulaires contigus dont le pourtour, en plan, est indiqué en 25.

La bande est représentée par les lignes en traits mixtes 17.

Les axes des rouleaux 18, 19 sont indiqués en 18a et 19a.

Les perforations de la plaque 23 de chaque caisson 22 sont réparties à l'intérieur de rectangles hachurés 24 s'arrêtant à quelque distance des bords de la bande 17, comme on le voit sur la figure 6.

Les perforations peuvent avoir un diamètre d'environ 5 mm et être disposées en quinconce sur des droites parallèles à la longueur de la bande 17 et distantes entre elles d'environ 30 mm et sur des droites perpendiculaires distantes l'une de l'autre d'environ 20 mm.

Grâce aux coussins d'air, la résistance au déplacement des bandes 17, 17' le long des plaques 23, 23' est considérablement diminuée, tout en maintenant la pression désirée des bandes 17, 17' sur le matelas 20. La diminution de cette résistance est telle que le diamètre des rouleaux 18, 19, 18', 19' peut rester égal à la limite de 125 mm, tandis que la largeur maximum du matelas peut être doublée et portée sans inconvénient à 2,40 m sans provoquer des tensions excessives dans les bandes 17, 17', ce qui représente un avantage considérable par rapport aux crêpeuses antérieures.

Il est à remarquer que la diminution considérable des forces de frottement a plusieurs autres avantages importants. Elle permet de supprimer purement et simplement le tambour d'entraînement (9 sur figure 2) et les rouleaux d'embarrage, de qui élimine les problèmes liés à l'encrassement de ces rouleaux et simplifie la construction.

Pour que l'entraînement des bandes soit correctement assuré, il est prévu (figure 7) d'appliquer aux bandes transporteuses une tension initiale ; cette opération se fait par mesure de l'extension de la bande suivant des valeurs communiquées par le fournisseur. Il importe donc de maintenir cette tension initiale, mais il est nécessaire de faire en sorte qu'elle ne puisse pas être dépassée, afin d'éviter le déchirement de la bande.

Cette condition peut être obtenue au moyen d'un rouleau de tension 18 mobile monté sur un système élastique lui permettant de réagir éventuellement en cas d'augmentation du diamètre d'un rouleau ou en cas de dilatation de la bande par l'effet de la température de l'étuve de polymérisation.

Pour assurer un déplacement parallèle (translation) du rouleau de tension, les paliers de celui-ci sont portés par des plaques 27 (coulissant dans des glissières non représentées), reliées mécaniquement à un système de crémaillère 28 et pignons 29.

La tension dans la bande est réalisée par deux vérins 30 pneumatiques ou hydrauliques agissant sur chacune des glissières 27 du rouleau- de tension 18.

Il va de soi que la disposition des caissons étanches tels que 22 entre les deux brins de chaque bande d'entraînement est analogue à celle décrite, avec cette seule différence que, les trois transporteurs supérieurs pouvant être disposés obliquement selon les données de production, leur face formée par une tôle perforée soit inclinée comme le brin de la bande d'entraînement avec laquelle elle coopère pour former le coussin d'air. Les caissons étanches 22 sont donc complètement solidaires de leur bande respective, quelle que soit l'inclinaison du transporteur.

On a indiqué plus haut que les perforations de la plaque perforée 23, 23' ne s'étendent pas jusqu'aux bords de la bande. La raison est que cela évite des pertes d'air sous pression.

## Revendications

1. Crêpeuse pour produire une réorganisation de la structure d'un matelas (20) de fibres encollées et comportant à cet effet au moins une paire de transporteurs continus disposés entre des transporteurs de reception et d'étuve, prévus pour être traversés par ledit matelas et le comprimer dans le sens de son épaisseur et longitudinalement, caractérisée en ce qu'au moins un transporteur est une bande (17) continue, lisse, en matière flexible, en ce que ladite crêpeuse comporte au moins une plaque (23), stationnaire de maintien de la partie active du transporteur, disposée en regard et à proximité immédiate de la partie active du transporteur prévue pour comprimer et entraîner ledit matelas, cette plaque (23) de maintien étant prévue pour résister aux déformations de flexion de cette partie active du transporteur et maintenir ainsi la forme du transporteur, et en ce qu'elle comporte des moyens pour former et maintenir, pendant le crêpage, un coussin d'air entre la plaque de maintien et la partie active du transporteur associé, glissant sur elle, pour minimiser la résistance à ce glissement.

2. Crêpeuse selon la revendication 1 pour produire une réorganisation de la structure d'un matelas (20) de fibres encollées et comportant à cet effet au moins trois paires (1, 2 ; 4, 5 ; 6, 7) de transporteurs continus disposés en série et prévus pour être traversés successivement par ledit matelas et le comprimer dans le sens de son épaisseur et longitudinalement, une diminution progressive de l'espace entre les deux transporteurs d'au moins une paire assurant la compression en épaisseur tandis que des vitesses d'entraînement décroissantes des paires successives de transporteurs produisent la compression longitudinale, caractérisée en ce que les transporteurs sont des bandes (17,17') continues, lisses, en matière flexible non métallique, en ce qu'elle comporte des plaques métalliques stationnaires (23, 23') de maintien en forme de la partie active des transporteurs, disposés chacune en regard et à proximité immédiate de la partie active de chaque transporteur prévue pour comprimer et entraîner ledit matelas (20), ces plaques de maintien étant prévues pour résister aux déformations de flexion de cette partie active des transporteurs et maintenir ainsi la forme des transporteurs, et en ce qu'elle comporte des moyens pour former et maintenir pendant le crêpage, un coussin d'air entre chacune de ces plaques de maintien et la partie active du transporteur associé glissant sur elle, pour minimiser la résistance à ce glissement.

3. Crêpeuse selon la revendication 2, caractérisée en ce que chacune desdites plaques de maintien constitue au moins une partie de l'une des faces d'un caisson (22) étanche alimenté en air sous pression, des perforations de ces plaques (23,23') laissant sortir l'air du caisson pour former ledit coussin d'air.

4. Crêpeuse selon la revendication 3, caractérisée en ce que lesdites perforations de chaque plaque (23,23') de maintien s'étendent sur toute la surface de chaque plaque, sauf dans la partie en regard de la région marginale des transporteurs.

5. Crêpeuse selon la revendication 3, caractérisée en ce que chaque caisson (22) est disposé dans l'espace compris entre les deux brins d'un transporteur.

6. Crêpeuse selon la revendication 2 ou 3, caractérisée en ce qu'elle comporte, pour chaque transporteur, un dispositif pour donner à la bande (17,27') de ce transporteur une tension initiale et pour la maintenir sensiblement constante pendant le travail de crêpage.

## Patentansprüche

1. Kreppvorrichtung zur Erzeugung einer Neuordnung der Struktur einer Matte (20) aus beschichteten Fasern, welche zu diesem Zweck wenigstens ein Paar Stetigförderer enthält, die zwischen stetigförderern von Aufnahme und Behälter angeordnet sind und die dafur vorgesehen sind, dass sie von der Matte durchlaufen werden und diese in Dicken- und Längsrichtung verdichten, **dadurch gekennzeichnet, daß** wenigstens ein Förderer ein glatter endloser Fördergurt (17) aus flexiblem Material ist, daß die Kreppvorrichtung wenigstens eine unbewegliche Halteplatte (23) für den aktiven Teil des Förderers umfaßt, die ihm gegenüberstehend in unmittelbarer Nähe des aktiven Teils des zum Verdichten und Transportieren der Matte vorgesehenen Förderers angeordnet ist, wobei diese Halteplatte (23) bestimmt ist, diesen aktiven Teil des Förderers vor Biegeverformungen zu schützen und somit für die Beibehaltung der Form des Förderers zu sorgen, **und daß** sie zur Minimierung des Gleitwiderstands Mittel umfaßt, um während des Kreppvorgangs ein Luftkissen zwischen der Halteplatte und dem damit verbundenen aktiven Teil des Förderers, der über sie gleitet, zu bilden und aufrechtzuerhalten.

2. Kreppvorrichtung nach Anspruch 1 zur Erzeugung einer Neuordnung der Struktur einer Matte (20) aus beschichteten Fasern, welche zu diesem Zweck wenigstens drei Paare (1, 2; 4, 5; 6, 7) aus in Reihe angeordneten Stetigförderern enthält, die dafür vorgesehen sind, daß sie nacheinander von der Matte durchlaufen werden und diese in Dicken- und Längsrichtung verdichten, wobei eine fortschreitende Verringerung des Zwischenraums zwischen den beiden Förderern wenigstens eines Paares für die Verdichtung in Dickenrichtung sorgt, während abnehmende Transportgeschwindigkeiten der aufeinanderfolgenden Fördererpaare die Längsverdichtung bewirken, **dadurch gekennzeichnet, daß** die Förderer glatte endlose Fördergurte (17, 17') aus nicht-metallischem flexiblem Material sind, **daß** sie unbewegliche Metallhalteplatten (23, 23') für die Form des aktiven Teils der Förderer umfaßt, die jeweils ihm gegenüberstehend in unmittelbarer Nähe des aktiven Teils jedes zum Verdichten und Transportieren der Matte (20) vorgesehenen Förderers angeordnet sind, wobei diese Halteplatten bestimmt sind, diesen aktiven Teil des Förderers vor Biegeverformungen zu schützen und somit für die Beibehaltung der Form des Förderers zu sorgen, und **daß** sie zur Minimierung des Gleitwiderstands Mittel umfaßt, um während des Kreppvorgangs ein Luftkissen zwischen jede dieser Halteplatten und dem damit verbundenen aktiven Teil des Förderers, der über sie gleitet, zu bilden und aufrechtzuerhalten.

3. Kreppvorrichtung nach Anspruch 2, **dadurch gekennzeichnet, daß** jede der Halteplatten wenigstens einen Teil einer der Seiten eines mit Druckluft versorgten dichten Kastens (22) bildet, wobei Löcher in diesen Platten (23, 23') aus dem Kasten Luft zur Bildung des Luftkissens austreten lassen.

4. Kreppvorrichtung nach Anspruch 3, **dadurch gekennzeichnet, daß** sich die Löcher jeder Halteplatte (23, 23') über die gesamte Oberfläche jeder Platte erstrecken, außer in dem Teil, der dem Randbereich der Förderer gegenübersteht.

5. Kreppvorrichtung nach Anspruch 3, **dadurch gekennzeichnet, daß** jeder Kasten (22) im Zwischenraum zwischen den beiden Trumen eines Förderers angeordnet ist.

6. Kreppvorrichtung nach Anspruch 2 oder 3, **dadurch gekennzeichnet, daß** sie für jeden Förderer eine Einrichtung umfaßt, die dem Fördergurt (17, 27') des Förderers eine Vorpannung verleiht und sie während des Kreppvorgangs im wesentlichen konstanthält.

## Claims

1. Creping machine for rearranging the structure of a sized fibre mat (20) and for this purpose comprising at least one pair of continuous conveyors disposed between reception and oven conveyors provided so as to be traversed by said mat and compress it in the direction of its thickness and longitudinally, characterised in that at least one conveyor is a continuous smooth belt (17) made of flexible material; in that said creping machine comprises at least one stationary plate (23) for supporting the active part of the conveyor, disposed opposite and in the immediate vicinity of the active part of the conveyor arranged so as to compress and entrain said mat, this supporting plate (23) being provided so as to resist bending deformation of this active part of the conveyor and thus maintain the shape of the conveyor; and in that it comprises means for forming and maintaining, during the creping process, an air cushion between the retaining plate and the active part of the associated conveyor, sliding thereon, in order to reduce sliding resistance to a minimum.

2. Creping machine according to Claim 1 for rearranging the structure of a sized fibre mat (20) and comprising for this purpose at least three pairs (1, 2; 4, 5; 6, 7) of continuous conveyors disposed in series and arranged so as to be traversed successively by said mat and compress it in the direction of its thickness and longitudinally, a progressive reduction of the space between the two conveyors of at least one pair compressing the thickness of the mat whilst decreasing drive speeds of the successive pairs of conveyors produce the longitudinal compression, characterised in that the conveyors are continuous smooth belts (17, 17') made of non-metallic flexible material; in that it comprises stationary metal plates (23, 23') for maintaining the shape of the active part of the conveyors, each disposed opposite and in the immediate vicinity of the active part of each conveyor provided so as to compress and entrain said mat (20), these retaining plates being provided so as to resist the bending deformation of this active part of the conveyors and thus retain the shape of the conveyors; and in that it comprises means for forming and maintaining, during the creping process, an air cushion between each of these retaining plates and the active part of the associated conveyor sliding thereon, in order to reduce resistance to this sliding effect to a minimum.

3. Creping machine according to Claim 2, characterised in that each of said retaining plates forms at least part of one of the faces of a leaktight chamber (22) supplied with compressed air, perforations in these plates (23, 23') allowing air to emerge from the chamber to form said air cushion.

4. Creping machine according to Claim 3, characterised in that said perforations in each retaining plate (23, 23') extend over the entire surface of each plate, apart from in the section opposite the edge area of the conveyors.

5. Creping machine according to Claim 3, characterised in that each chamber (22) is disposed in the space between the two ends of a conveyor.

6. Creping machine according to Claim 2 or 3, characterised in that it comprises for each conveyor a device for imparting initial tension to the belt (17, 17') of this conveyor and for maintaining it substantially constant during the creping operation.
